# EUROPÄISCHE PATENTANMELDUNG

(11) **EP 3 785 879 A1**
(43) Veröffentlichungstag der Anmeldung: **03.03.2021**
(21) Anmeldenummer: 20191637.6
(22) Anmeldetag: 18.08.2020
(51) Int. Cl.: B29C 45/27

(54) **DÜSENEINSATZ FÜR EINE SPRITZGIESSDÜSE, SPRITZGIESSDÜSE MIT EINEM DÜSENEINSATZ UND SPRITZGIESSWERKZEUG MIT EINER SPRITZGIESSDÜSE UND DÜSENEINSATZ**

(30) Priorität: 28.08.2019 DE 102019123131
(71) Anmelder: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(57) **Zusammenfassung**

Die Erfindung betrifft einen Düseneinsatz (102) für eine Spritzgießdüse (100) eines Spritzgießwerkzeugs mit einem Halteelement (110), einem Verteilerelement (120) und wenigstens einer Düsenspitze (108), wobei in dem Verteilerelement (120) ein Strömungskanal (158) und wenigstens ein Verteilerkanal (130) für eine zu verarbeitende Spritzgießmasse ausgebildet ist, wobei der Strömungskanal (158) eine Aufnahmeöffnung (160) aufweist und dazu ausgebildet ist, die Spritzgießmasse von der Spritzgießdüse (100) über die Aufnahmeöffnung (160) zu empfangen und dem wenigstens einen Verteilerkanal (130) zuzuführen, wobei sich der wenigstens eine Verteilerkanal (130) quer zu dem Strömungskanal (158) erstreckt, und wobei der Verteilerkanal (130) dazu ausgebildet ist, die von dem Strömungskanal (158) empfangene Spritzgießmasse der wenigstens einen Düsenspitze (108) zuzuführen, sodass die zu verarbeitende Spritzgießmasse über die Düsenspitze (108) einer in einem Formeinsatz ausgebildeten Formkavität des Spritzgießwerkzeugs zugeführt wird, wobei jede Düsenspitze (108) quer zu der Erstreckungsrichtung des Strömungskanals (158) ausgerichtet in dem Halteelement (110) lösbar angeordnet und durch das Verteilerelement (120) in ihrer Position in dem Halteelement (110) fixiert ist, wobei der Düseneinsatz (102) ferner ein Dichtelement (116) mit wenigstens einer ersten Dichtfläche (131) und einer zweiten Dichtfläche (132) aufweist, wobei das Haltelement (110) wenigstens eine dritte Dichtfläche (133) aufweist, wobei das Dichtelement (116) an dem Halteelement (110) so befestigt ist, dass die erste Dichtfläche (131) auf die dritte Dichtfläche (133) gepresst wird, wobei die zweite Dichtfläche (132) an eine vierte Dichtfläche (134), die an der Spritzgussdüse (100) angeordnet ist, gepresst wird, wenn der Düseneinsatz (102) in einer Aufnahme für den Düseneinsatz (102) der Spritzgussdüse (100) aufgenommen und befestigt ist. Mit der Erfindung wird die Dichtigkeit eines Düseneinsatzes (102) für einen seitlichen Anguss verbessert.

## Beschreibung

Die Erfindung betrifft einen Düseneinsatz für eine Spritzgießdüse gemäß dem Oberbegriff von Anspruch 1, sowie eine Spritzgießdüse nach Anspruch 11 und ein Spritzgießwerkzeug nach Anspruch 12.

Bei der Herstellung von Kunststoffteilen mit Hilfe von Spritzgusstechniken ist es häufig von Vorteil, die Formkavitäten von der Seite anzuspritzen. Hierfür geeignete Spritzgießdüsen und Spritzgießwerkzeuge sind daher im Stand der Technik in verschiedenen Ausgestaltungen bekannt.

Beispielsweise offenbart hierzu die DE 10 2008 051 202 A1 eine Spritzgießdüse bei der in einem Materialrohr der Spritzgießdüse ein Verteilerelement eingesetzt ist. Das Verteilerelement weist einen Hauptkanal für eine Schmelze auf, der sich ein einem unteren Abschnitt des Verteilerelements in einer Mehrzahl von Verteilerkanälen fortsetzt, die sich in radialer Richtung von dem Hauptkanal erstrecken. An dem unteren Ende des Verteilerelements ist ferner ein Halteelement angeordnet, das zur Aufnahme von Düsenspitzen und zur Positionierung dieser Düsenspitzen relativ zu den Verteilerkanälen des Verteilerelements ausgebildet ist.

Solche Anordnungen von Verteilerelementen mit daran radial angeordneten Düsenspitzen weisen eine Vielzahl von Übergängen zwischen fluidführenden Elementen auf. Aufgrund der im Zuge eines Spritzgießprozesses auftretenden hohen Drücken, besteht insbesondere an den Schnittstellen zwischen den einzelnen fluidführenden Elementen und, auf die oben beschriebene Ausführung bezogen, insbesondere zwischen dem Verteilerelement und den Düsenspitzen die Gefahr einer Leckage von Spritzgussmasse. Im Falle einer solchen Leckage besteht die Gefahr, dass ausgetretene Spritzgießmasse zurück in das Werkzeug gepresst wird und dabei Fehlfunktionen oder gar die Zerstörung des Werkzeugs nach sich ziehen kann.

Demgegenüber besteht die Aufgabe, welche dem in der vorliegenden Anmeldung beschriebenen Gegenstand zugrunde liegt, darin, die Dichtigkeit eines Düseneinsatzes für einen seitlichen Anguss zu verbessern.

Hauptmerkmale der Erfindung sind im kennzeichnenden Teil von Anspruch 1, sowie in den Ansprüchen 11 und 12 angegeben. Ausgestaltungen sind Gegenstand der Ansprüche 2 bis 10.

In einem ersten Aspekt betrifft die Erfindung einen Düseneinsatz für eine Spritzgießdüse eines Spritzgießwerkzeugs mit einem Halteelement, einem Verteilerelement und wenigstens einer Düsenspitze, wobei in dem Verteilerelement ein Strömungskanal und wenigstens ein Verteilerkanal für eine zu verarbeitende Spritzgießmasse ausgebildet ist. Der Strömungskanal weist eine Aufnahmeöffnung auf und ist dazu ausgebildet, die Spritzgießmasse von der Spritzgießdüse über die Aufnahmeöffnung zu empfangen und dem wenigstens einen Verteilerkanal zuzuführen. Der wenigstens eine Verteilerkanal erstreckt sich quer zu dem Strömungskanal. Ist dazu ausgebildet, die von dem Strömungskanal empfangene Spritzgießmasse der wenigstens einen Düsenspitze zuzuführen, sodass die zu verarbeitende Spritzgießmasse über die Düsenspitze einer in einem Formeinsatz ausgebildeten Formkavität des Spritzgießwerkzeugs zugeführt wird. Jede Düsenspitze ist dabei quer zu der Erstreckungsrichtung des Strömungskanals ausgerichtet in dem Halteelement lösbar angeordnet und durch das Verteilerelement in ihrer Position in dem Halteelement fixiert. Erfindungsgemäß ist dabei vorgesehen, dass der Düseneinsatz ferner ein Dichtelement mit wenigstens einer ersten Dichtfläche und einer zweiten Dichtfläche aufweist, wobei das Haltelement wenigstens eine dritte Dichtfläche aufweist, wobei das Dichtelement an dem Halteelement so befestigt ist, dass die erste Dichtfläche auf die dritte Dichtfläche gepresst wird, wobei die zweite Dichtfläche an eine vierte Dichtfläche, die an der Spritzgussdüse angeordnet ist, gepresst wird, wenn der Düseneinsatz in einer Aufnahme für den Düseneinsatz der Spritzgussdüse aufgenommen und befestigt ist.

Die Verwendung eines Dichtelements, welches durch seine Anordnung an dem Düseneinsatz bzw. an dem Haltelement eine Kraft auf das Halteelement in Richtung auf das Verteilerelement ausübt, kann eine verbesserte Abdichtung des Düseneinsatzes erreicht werden, sodass die Gefahr eines Austretens von Spritzgießmasse aus dem Düseneinsatz reduziert werden kann. Die erste und dritte Dichtfläche sind dabei vorzugsweise zwischen dem Abschnitt des Verteilerelements, in dem die Verteilerkanäle verlaufen, und der der Aufnahmeöffnung des Verteilerelements zugewandten Seite des Halteelements angeordnet. Somit verlaufen die erste und dritte Dichtfläche vorzugsweise in einem Bereich des Düseneinsatzes, welcher bei einem in eine Spritzgießdüse eingesetzten Düseneinsatz dem Düsenkörper am nächsten ist. Die zweite und vierte Dichtfläche sind zwischen dem Abschnitt des Verteilerelements, in dem die Verteilerkanäle verlaufen, und der der Aufnahmeöffnung des Verteilerelements abgewandten Seite der Spritzgießdüse angeordnet.

Bei dem Dichtelement kann es sich grundsätzlich zunächst um ein beliebig geartetes Bauteil handeln, welches so an dem Halteelement des Düseneinsatzes angeordnet werden kann, dass es aufgrund seiner Befestigung an dem Halteelement eine Kraft auf das Halteelement bewirkt, sodass die erste und dritte Dichtfläche des Halteelements und des Dichtelements aufeinandergepresst werden. Bei einer Befestigung des Düseneinsatzes an der Spritzgießdüse werden die zweite und vierte Dichtfläche des Dichtelements und der Spritzgießdüse aufeinander gepressst. Nach einer bevorzugten Ausführungsform ist das Dichtelement jedoch scheibenförmig, was eine leichte Herstellbarkeit und eine einfache Anordnung an dem meist ringförmigen Halteelement ermöglicht. Insbesondere kann es sich bei dem Dichtelement ebenfalls um ein ringförmiges Element handeln, dessen zentrale Ausnehmung in der Einbaulage des Dichtelements in Deckung mit einer zentralen Öffnung des ringförmigen Halteelements ist.

Dabei ist nach einer bevorzugten Ausführungsform das Dichtelement auf einer der Aufnahmeöffnung des Strömungskanals zugewandten Seite des Halteelements angeordnet und besteht aus einem schlecht wärmeleitenden Material wie beispielsweise Titan. Durch die beschriebene Anordnung des Dichtelements befindet sich das Dichtelement im Allgemeinen zwischen dem Düsenkörper und dem Halteelement und kann aufgrund seiner schlechten Wärmeleitfähigkeit als thermische Isolierung zwischen dem Düsenkörper und dem Halteelement dienen.

Das Dichtelement ist nach einer weiteren Ausführungsform vorzugsweise einteilig ausgebildet, was dessen Stabilität erhöht und seine Herstellung im Allgemeinen vereinfacht. Beispielsweise kann es sich bei dem Dichtelement um ein aus dem Vollen gefrästes Metallteil handeln.

Wie zuvor bereits ausgeführt wurde, bewirkt das Dichtelement aufgrund seiner Befestigung an dem Halteelement eine Kraft auf das Halteelement, die ein Aneinanderdrücken der ersten und dritten Dichtfläche bewirkt. Hierzu ist nach einer bevorzugten Ausführungsform vorgesehen, dass der Düseneinsatz wenigstens ein Befestigungsmittel, z. B. Senkschrauben, aufweist, wobei das wenigstens eine Befestigungsmittel durch das Haltelement und das Dichtelement hindurchragt und dazu ausgebildet ist, das Dichtelement mit einer Kraft in Richtung auf das Halteelement zu beaufschlagen, sodass die erste Dichtfläche auf die dritte Dichtfläche gepresst wird. Insbesondere kann es sich bei dem Befestigungsmittel um eine oder mehrere Schrauben handeln, welche durch entsprechende Ausnehmungen des Halteelements hindurchgeführt werden und in in dem Dichtelement angeordnete Innengewinde eingreifen, sodass durch Anziehen der Schrauben das Dichtelement an das Halteelement gezogen wird. Dabei sind die Befestigungsmittel vorzugsweise so angeordnet, dass ein gleichmäßiger Anpressdruck über die erste Dichtfläche des Dichtelements auf der dritten Dichtfläche an dem Halteelement erzeugt wird. Bei einer Ausführung der Befestigungsmittel als Schrauben sind beispielsweise zwei Schrauben vorgesehen, wobei die Schrauben an diametral gegenüberliegenden Positionen in Bezug auf das Dichtelement an dem Dichtelement angeordnet sind.

Um die Dichtigkeit des Düseneinsatzes weiter zu verbessern, ist vorgesehen, dass der Düseneinsatz weitere Befestigungsmittel aufweist, die zumindest durch das Verteilerelement und das Halteelement hindurchragen und dazu ausgebildet sind, das Haltelement und das Verteilerelement an einer Spritzgießdüse zu befestigen. Das Dichtelement ist dann zwischen der Spritzgießdüse und dem Halteelement bzw. Verteilerelement angeordnet. Bei der Befestigung des Düseneinsatzes an der Spritzgießdüse wird die zweite Dichtfläche des Dichtelements an eine vierte Dichtfläche an der Spritzgießdüse gepresst. Damit wird die Dichtigkeit der Spritzgießdüse verbessert. Weiter kann die Einbauhöhe des Halteelements mit den Düseneinsätzen mittels der Auswahl einer Dicke des Dichtelements eingestellt werden. Die Dicke des Dichtelements ist dabei der Abstand zwischen der ersten und zweiten Dichtfläche.

Nach einer weiteren Ausführungsform wird bei einer Beaufschlagung mit einer Kraft in Richtung auf das Halteelement durch das weitere Befestigungsmittel eine Kraft auf die wenigstens eine Düsenspitze in Richtung auf das Verteilerelement ausgeübt wird. Auf diese Weise kann die Schnittstelle zwischen dem Verteilerelement einerseits und den Düsenspitzen andererseits ebenfalls besser abgedichtet werden. Vorzugsweise weisen die Düsenspitzen hierzu auf ihrer Rückseite eine Dichtfläche auf, welche durch das Halteelement auf eine entsprechend ausgeformte Oberfläche des Verteilerelements gepresst wird. Um zu gewährleisten, dass durch das Anpressen des Halteelements auf das Verteilerelement gleichzeitig ein Druck auf die Düsenspitzen in Richtung des Verteilerelements erzeugt wird, kann eine Seitenwandung des Verteilerelements, in der die Verteilerkanäle enden und auf der die Düsenspitzen anliegen, so schräg ausgeführt werden, dass durch eine Bewegung der Düsenspitzen entlang dieser Seitenwandung die Düsenspitze auf die Seitenwandung gepresst wird. Beispielsweise kann hierzu ein konischer Verlauf der Seitenwandung des Verteilerelements vorgesehen sein.

Um den Zusammenbau des Düseneinsatzes zu erleichtern, ist nach einer weiteren Ausführungsform vorgesehen, dass an dem Halteelement wenigstens ein Positioniermittel angeordnet ist, welches in eine Ausnehmung des Dichtelements so eingreift, dass die Lage des Dichtelements relativ zu dem Halteelement durch den Eingriff des Positioniermittels in die Ausnehmung festgelegt ist. Beispielsweise kann es sich bei dem Positionierelement um einen oder mehrere Bolzen handeln, welche aus dem Halteelement hervorstehen und in entsprechende Ausnehmungen des Dichtelements eingreifen. Hierdurch kann auf einfache Art und Weise der Zusammenbau des Düseneinsatzes durch exakte Positionierung der Elemente relativ zueinander vereinfacht werden. Insbesondere bei Verwendung von Schrauben zur Befestigung des Dichtelements, welche sich durch das Verteilerelement und das Halteelement hindurch erstrecken, ist eine exakte Positionierung des Dichtelements hilfreich, sodass die Schrauben leicht in die entsprechenden Ausnehmungen eingesetzt und mit dem Dichtelement verschraubt werden können.

Nach einer weiteren Ausführungsform ist ferner vorgesehen, dass der Düseneinsatz ferner ein Abdeckelement aufweist, wobei das Abdeckelement auf der der Aufnahmeöffnung des Verteilerelements abgewandten Seite des Verteilerelements an dem Verteilerelement angeordnet ist, sodass das Verteilerelement im Bereich der Verteilerkanäle von dem Halteelement und dem Abdeckelement vollständig umschlossen ist. Hierdurch wird vorzugsweise das Verteilerelement vollständig von dem Halteelement einerseits und dem Abdeckelement andererseits umschlossen, sodass der Düseneinsatz eine in sich geschlossene Baugruppe bildet. Dabei dichtet das Abdeckelement vorzugsweise den Düseneinsatz auf der dem Düsenkörper abgewandten Seite des Düsenelements ab, sodass Spritzgießmasse, welche an der Schnittstelle zwischen Düsenspitze und Verteilerelement austritt, nicht aus dem Düseneinsatz austreten kann. Das Abdeckelement ist dabei bevorzugt so an die Form des Haltelements angepasst, dass es umlaufend an dem Halteelement anliegt und eine umlaufende Dichtung ausbildet. Zur Befestigung des Abdeckelements kann dabei eine weitere Schraube vorgesehen sein, welche zentral durch das Abdeckelement hindurch in das Verteilerelement eingreift und folglich das Abdeckelement an dem Verteilerelement fixiert.

Um eine durchgängige Temperierung des Spritzgießmaterials auch im Bereich des Düseneinsatzes zu gewährleisten, ist nach einer weiteren Ausführungsform vorgesehen, dass das Halteelement beheizt ist. Hierzu können beispielsweise Heizleitungen in das Halteelement eingebracht, oder auf das Halteelement aufgebracht werden.

Die Dichtigkeit des erfindungsgemäßen Düseneinsatzes kann nach einer weiteren Ausführungsform verbessert werden, indem der Düseneinsatz je Düsenspitze eine Dichthülse aufweist, wobei das Haltelement je Düsenspitze eine Aufnahme aufweist, wobei in jede der Aufnahmen jeweils eine Dichthülse eingesetzt ist, wobei in die Dichthülsen je eine Düsenspitze zumindest teilweise eingesetzt ist. Durch Verwendung einer solche Dichthülse kann durch entsprechende Anpassung des Dichthülse an die Form der Düsenspitze und des Halteelements eine bessere Abdichtung an der Schnittstelle zwischen Halteelement und Düsenspitze erfolgen, sodass auch hier das Risiko eines Austritts von Spritzgießmaterial aus dem Düseneinsatz reduziert wird.

In einem weiteren Aspekt betrifft die vorliegende Anmeldung eine Spritzgießdüse mit einem Düseneinsatz wie er zuvor beschrieben wurde. Die Spritzgießdüse weist wenigstens einen Düsenkörper auf, in dem ein Zuführkanal und eine Aufnahme für den Düseneinsatz ausgebildet ist, wobei der Zuführkanal dazu ausgebildet ist, eine zu verarbeitende Spritzgießmasse zu der Aufnahme zu leiten. Der Düseneinsatz ist in die Aufnahme eingesetzt, sodass der Strömungskanal des Düseneinsatzes mit dem Zuführkanal der Spritzgießdüse strömungsverbunden ist

Ferner betrifft die vorliegende Erfindung auch ein Spritzgießwerkzeug mit einer solchen Spritzgießdüse.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Spritzgießdüse mit einem Düseneinsatz,
- Fig. 2: eine perspektivische Ansicht eines Düseneinsatzes,
- Fig. 3: eine seitliche Schnittansicht eines Düseneinsatzes mit einem Verteilerelement mit schräger Mantelfläche, und
- Fig. 4: eine Explosionsansicht des Düseneinsatzes der Fig. 3.

Im Folgenden werden einander ähnliche oder identische Elemente mit denselben Bezugszeichen gekennzeichnet.

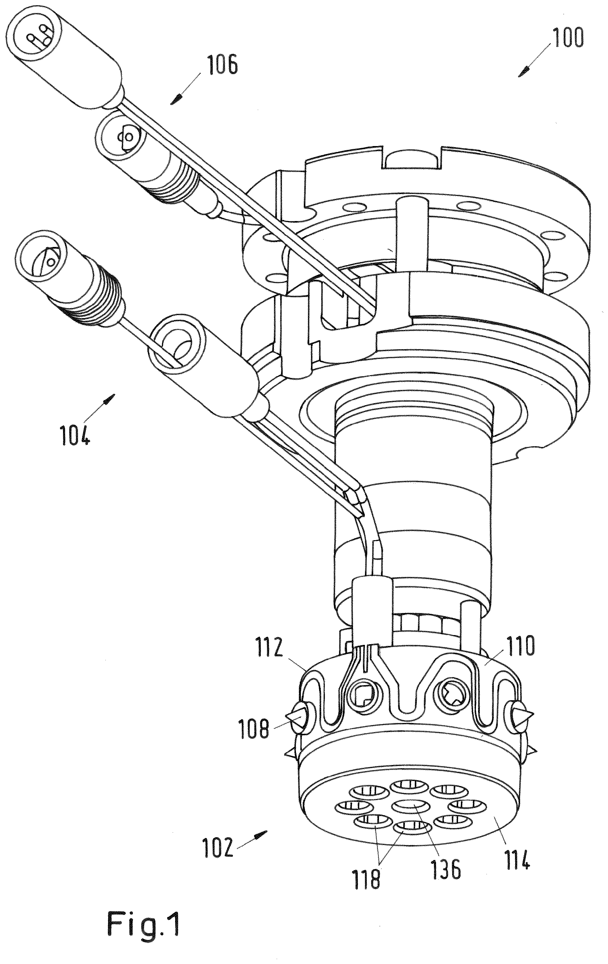

Die Figur 1 zeigt eine perspektivische Ansicht einer Spritzgießdüse 100 mit einem Düseneinsatz 102. Der Düseneinsatz 102 ist in das untere Ende der Spritzgießdüse 100 eingesetzt. Wie in der Figur 1 gut erkennbar ist, weisen sowohl der Düseneinsatz 102, als auch die Spritzgießdüse 100 jeweils Anschlüsse 104 und 106 für eine Heizung auf.

Der in die Spritzgießdüse 100 eingesetzte Düseneinsatz 102 weist eine Vielzahl von sternförmig angeordneten Düsenspitzen 108 auf, welche in einem Halteelement 110 angeordnet sind. Das Halteelement 110 weist wiederum eine Heizleiterbahn 112 auf, welche mit dem Anschluss 104 verbunden ist. Die Heizleiterbahn 112 erstreckt sich schlangenförmig auf der äußeren Oberfläche des Halteelement 110, wodurch eine gleichmäßige Beheizung des Halteelements 110 und der darin angeordneten Düsenspitzen 108 gewährleistet wird. An der Unterseite des Düseneinsatzes 102 ist ein Abdeckelement 114 angeordnet, welches den Düseneinsatz 102 nach unten abschließt. Der Düseneinsatz 102 wird durch acht Schrauben 118, welche von der Unterseite des Abdeckelements 114 durch den Düseneinsatz 102 geführt sind und an der Spritzgießdüse 100 angreifen, zusammengehalten.

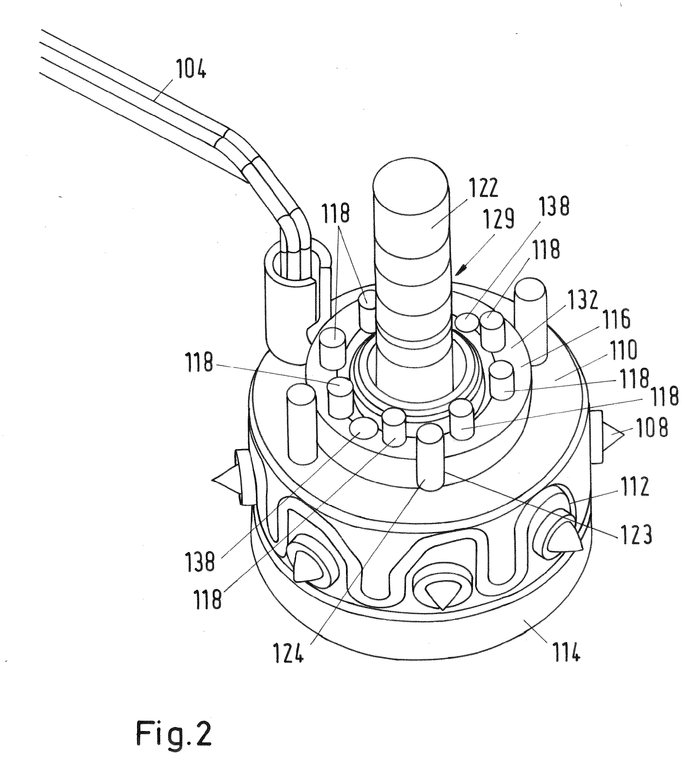

Der in Figur 1 gezeigte Düseneinsatz 102 wird in der Figur 2 nochmals in einer perspektivischen Draufsicht dargestellt. Auch in der Figur 2 ist der Aufbau des Düseneinsatzes 102 aus einem Abdeckelement 114, einem Halteelement 110, in dem Halteelement 110 angeordneten Düsenspitzen 108 und einer in dem Halteelement 110 verlaufenden Heizung 112 mit entsprechenden Anschlüssen 104 gut zu erkennen. Ferner ist in der Figur 2 gut zu erkennen, dass auf der Oberseite des Halteelements 110 ein Dichtelement 116 angeordnet ist. Bei dem Dichtelement 116 handelt es sich um ein ringförmiges Element aus einem Metall, beispielsweise Edelstahl, welches durch Befestigungsmittel 138, in diesem Fall zwei Schrauben, auf der Oberseite des Halteelements 110 befestigt ist. In der in Figur 2 dargestellten Ausführungsform werden die Befestigungsmittel 138 durch das Dichtelement 116 hindurchgeführt, sodass durch ein Anziehen der Befestigungsmittel 138 das Dichtelement 116 an das Halteelement 110 gepresst wird.

In der Figur 2 ist ferner erkennbar, dass im Inneren des Düseneinsatzes 102 ein Verteilerelement 120 angeordnet ist. In der in Figur 2 gewählten Ansicht ist jedoch von dem Verteilerelement 120 lediglich der Anschlussstutzen 122 zu erkennen, mit dem eine Verbindung zwischen dem Düseneinsatz 102 und der Spritzgießdüse 100, bzw. einem in der Spritzgießdüse 100 vorhandenen Kanal für eine Spritzgießmasse hergestellt wird.

Wie in der Figur 2 ferner erkennbar ist, sind auf der Oberseite des Halteelements 110 Positioniermittel 124 angeordnet, welche in entsprechende Ausnehmungen 123 des Dichtelements 116 eingreifen. Durch die Verwendung solcher Positioniermittel 124, wird der Zusammenbau des Düseneinsatzes 102 erleichtert, da die korrekte Positionierung des Dichtelements 116 durch einführen der Positioniermittel 124 in die entsprechenden Ausnehmungen 123 des Dichtelements bereits gewährleistet ist. Bei den Positioniermitteln 124 handelt es sich um Stifte, welche aus der Oberseite des Halteelements 110 hervorstehen. Es ist jedoch durchaus möglich, die Positioniermittel 124 in Form anderer geometrischer Objekte umzusetzen.

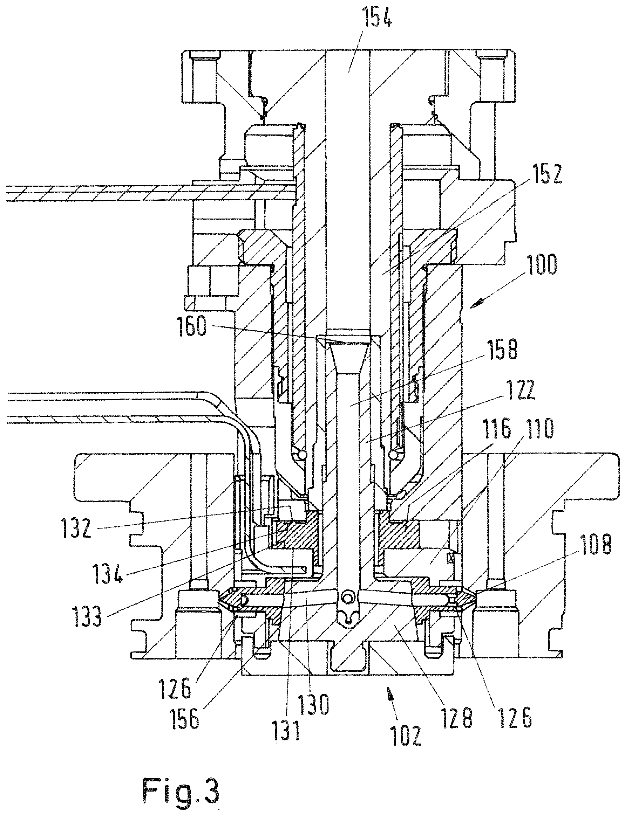

Die Figur 3 zeigt eine seitliche Schnittansicht eines Düseneinsatzes 102 und der Spritzgießdüse 100, wie er zuvor beschrieben wurde. Der Düseneinsatz 102 besteht im Wesentlichen aus einem Halteelement 110, welches in der dargestellten Ausführungsform als ringförmige Überwurfhülse ausgeführt ist. In dem Halteelement 110 sind mehrere Aufnahmen 140 für Düsenspitzen 108 vorgesehen, welche sich in dem dargestellten Ausführungsbeispiel radial aus dem Düseneinsatz 102 erstrecken. Die Düsenspitzen 108 sind dabei zumindest teilweise in Dichthülsen 126 angeordnet, welche in die Aufnahmen 140 des Halteelements 110 eingesetzt sind und als zusätzliches Dichtelement zwischen dem Halteelement 110 und der Düsenspitze 108 fungieren.

Der Düseneinsatz 102 weist ferner ein Verteilerelement 120 auf, welches im Wesentlichen aus einem Anschlussstutzen 122 und einem Verteilerblock 128 besteht. Wie zuvor bereits ausgeführt wurde, ist der Anschlussstutzen 122 dazu ausgebildet eine fluidführende Verbindung mit einem entsprechenden Zuführkanal einer Spritzgießdüse 100 herzustellen. Hierzu weist der Anschlussstutzen 122 an seinem oberen Ende eine Aufnahmeöffnung 160 auf, von der ausgehend sich ein Strömungskanal 158 durch den Anschlussstutzen 122 erstreckt. Der in dem Anschlussstutzen 122 verlaufende Strömungskanal 158 verzweigt sich innerhalb des Verteilerblocks 128 in eine Vielzahl radial und sternförmig angeordneter Verteilerkanäle 130, welche jeweils dazu ausgebildet sind, eine von dem Anschlussstutzen 122 empfangene Spritzgießmasse zu den Düsenspitzen 108 zu führen.

Die in der Figur 3 dargestellte Anordnung und der Verlauf der Verteilerkanäle 130, ist jedoch lediglich exemplarisch zu verstehen. Es ist durchaus möglich, dass die Verteilerkanäle 130 eine hiervon abweichende Anordnung und/oder Geometrie aufweisen. So ist es beispielsweise möglich, dass nicht alle Verteilerkanäle 130 in derselben Ebene verlaufen, sondern vielmehr in unterschiedlichen Ebenen beginnen, oder enden. Beispielsweise wäre es möglich, dass die Schnittpunkte zwischen dem Verteilerkanal 130 und dem in dem Anschlussstutzen 122 ausgebildeten Strömungskanal 158 in verschiedenen Höhen innerhalb des Verteilerblocks 128 angeordnet sind, jedoch auf derselben Höhe in die jeweiligen Düsenspitzen 108 übergehen.

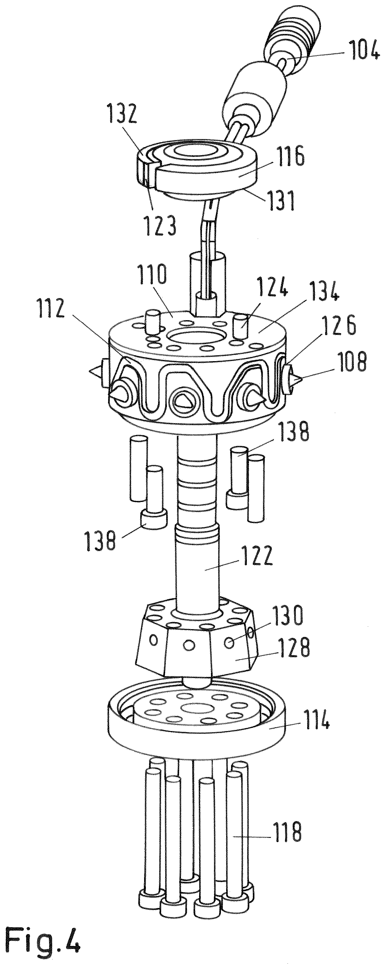

Auf einer Oberseite des Halteelements 110 ist ferner das Dichtelement 116 angeordnet, welches als ringförmiges Element aus einem vorzugsweise schlecht wärmeleitenden Metall ausgeführt ist. Das Dichtelement 116 ist dabei durch in Figur 4 dargestellte Befestigungsmittel 138 (in diesem Fall Schrauben) an dem Halteelement 110 festgelegt. Die Befestigungsmittel 138 sind hierzu von einer Unterseite des Halteelements 110 durch das Halteelement 110 hindurchgeführt und greifen in entsprechende Gewindebohrungen des Dichtelements 116 ein. Durch Anziehen der Befestigungsmittel 138 wird das Dichtelement 116 auf die Oberseite des Halteelements 110 gepresst. Hierdurch werden an der Oberseite des Halteelements 110 und an der Unterseite des Dichtelements 116 angeordnete Dichtflächen 131 und 133 aufeinandergepresst. Auf diese Weise wird der Düseneinsatz 102 im Bereich der ersten und dritten Dichtfläche 131 und 133 abgedichtet, sodass eine zwischen den Düsenspitzen 108 und dem Verteilerelement 120 austretende Spritzgießmasse nicht nach oben aus dem Düseneinsatz 102 austreten kann, womit die Gefahr einer Verschmutzung oder gar einer Beschädigung der Spritzgießdüse 100 reduziert werden kann.

Weiter weist das Dichtelement 116 eine zweite Dichtfläche 132 auf, die an eine vierte an der Spritzgießdüse 100 angeordnete Dichtfläche 134 gepresst wird, wenn der Düseneinsatz 102 in eine Aufnahme für den Düseneinsatz 102 der Spritzgießdüse 100 eingesetzt und befestigt wird. Die erste Dichtfläche 131 und die zweite Dichtfläche 132 sind an zwei voneinander weg weisenden Seitenflächen des Dichtelements 116 angeordnet.

Weitere Befestigungsmittel 118 sind von einer Unterseite des Verteilerelements 120 durch das Verteilerelement 120, das Halteelement 110 und das Dichtelement 116 hindurchgeführt und greifen in entsprechende Gewindebohrungen der Spritzgießdüse 100 ein. Durch das Anziehen der Befestigungsmittel 118 wird der Düseneinsatz 102 an der Spritzgießdüse 100 befestigt.

Der Abstand zwischen der ersten Dichtfläche 131 und der zweiten Dichtfläche 132 des Dichtelements 116 bestimmt dabei die Einbauhöhe des Halteelements 110 und der Düsenspitzen 108. Zum Einstellen der Einbauhöhe können Dichtelemente 116 mit verschiedenen Dicken vorgehalten werden.

Wie in der Figur 3 ferner zu sehen ist, ist an der Unterseite des Halteelements 110 das Abdeckelement 114 angeordnet. Das Abdeckelement 114 ist dabei zentral mit einer entsprechenden Schraube 136 an dem Verteilerblock 128 des Verteilerelements 120 befestigt. Dabei dichtet das Abdeckelement 114 vorzugsweise an den Berührpunkten zwischen dem Halteelement 110 den Düseneinsatz 102 ebenfalls gegenüber einem Austritt von Spritzgießmaterial ab. Insgesamt ergibt sich so ein geschlossener Aufbau des Düseneinsatzes 102, durch den vermieden werden kann, dass Spritzgießmaterial aus dem Düseneinsatz 102 austritt und möglicherweise die Spritzgießanlage bzw. das Spritzgießwerkzeug beschädigt.

Zum Zusammenbau des Düseneinsatzes 102 wird zunächst das Dichtelement 116 auf der Oberseite des Halteelements 110 angeordnet, wobei die Ausrichtung des Dichtelements 116 auf der Oberseite des Halteelements 110 durch entsprechende Positioniermittel 124 gewährleistet ist. Weiter wird das Dichtelement 116 durch die als Schrauben ausgebildeten Befestigungsmittel 138 an dem Halteelement 110 befestigt, so dass die erste Dichtfläche 131 und die dritte Dichtfläche 133 eine Dichtung gegenüber austretenden Spritzgussmittel bilden. Anschließend werden die Düsenspitzen 108 und die entsprechenden Dichthülsen 126 in die Aufnahmen 140 des Halteelements 110 eingesetzt. Wenn alle Düsenspitzen 108 positioniert sind, wird das Verteilerelement 120 in dem Halteelement 110 angeordnet. Hierzu wird zunächst der Anschlussstutzen 122 des Verteilerelements 120 durch eine entsprechende Öffnung 142 auf der Oberseite des Halteelements 110 und durch eine Öffnung 144 des Dichtelements 116 hindurchgeführt. Anschließend wird der Verteilerblock 128 so ausgerichtet, dass die Verteilerkanäle 130 sich mit in den Düsenspitzen 108 verlaufenden Kanälen in Deckung befinden.

Die korrekte Ausrichtung des Verteilerblocks 128 erlaubt dann auch das Hindurchführen der als Schrauben ausgebildeten weiteren Befestigungsmittel 118 durch den Verteilerblock 128, das Halteelement 110 und durch Bohrungen 146 des Dichtelements 116 und das Eingreifen der Schrauben in entsprechende Gewindebohrungen der Spritzgießdüse 100. Durch Anziehen der Schrauben 118 werden dann das Halteelement 110 und der Verteilerblock 128 so aufeinandergepresst, dass der Düseneinsatz 102 an der Spritzgießdüse 100 gehalten wird. Abschließend wird auf der Unterseite des Halteelements 110 das Abdeckelement 114 angeordnet und mit einer entsprechenden Schraube 136 an dem Verteilerblock 128 des Verteilerelements 120 befestigt. Insgesamt ergibt sich so ein in sich geschlossener Aufbau zur seitlichen Anspritzung mehrere Spritzgießkavitäten, der aufgrund der Abdichtung zwischen dem Halteelement 110 und dem Dichtelement 116 ein reduziertes Risiko für ein Austreten von Spritzgießmasse aus dem Düseneinsatz 102 mit sich bringt.

Das Dichtelement 116 befindet sich im Allgemeinen in der Einbaulage des Düseneinsatzes 102 in einem Düsenkörper dem Düsenkörper am nächsten. Um zu vermeiden, dass Wärme von dem Düsenkörper auf den Düseneinsatz 102 übertragen wird, oder umgekehrt, ist das Dichtelements 116 vorzugsweise aus einem schlecht wärmeleitenden Material hergestellt.

Ferner ist in der Figur 3 auch die Einbaulage eines Düseneinsatzes 102 in einer Spritzgießdüse 100 dargestellt. Wie in der Figur 3 gut zu erkennen ist, wird in der Einbaulage des Düseneinsatzes 102 der Anschlussstutzen 122 des Verteilerelements 120 in eine entsprechende Aufnahme des Düsenkörper 152 eingeführt. Hierdurch wird eine Strömungsverbindung zwischen einem in dem Düsenkörper 152 ausgebildeten Zuführkanal 154 und einem in dem Anschlussstutzen 122 ausgebildeten Strömungskanal hergestellt. Zwischen dem Düseneinsatz 102 und dem Düsenkörper 152 bzw. der Spritzgießdüse 100 ist das Dichtelement 116 angeordnet. Dabei wird die zweite Dichtfläche 132 des Dichtelements 116 beim Befestigen des Düseneinsatzes 102 in der Aufnahme an die vierte Dichtfläche 134 gepresst, die an der Spritzgussdüse 100 angeordnet ist. Über das Dichtelement 116 wird über die definierten stirnseitigen ersten und zweiten Dichtflächen 131, 132 sichergestellt, sollte im Bereich des Anschlussstutzen 122 eine Leckage auftreten, diese zum Spritzgießwerkzeug abgeschottet wird. Dabei dient, wie zuvor beschrieben wurde, das Dichtelement 116 auch als thermische Isolierung zwischen der Spritzgießdüse 100 und dem Düseneinsatz 102.

Die Seitenflächen 156 des Verteilerblocks 128 sind gegenüber der Vertikalen angeschrägt. Der Verteilerblock 128 kann weiter vorzugsweise eine konische Grundform aufweisen. Gleichermaßen sind auch die dem Verteilerblock 128 zugewandten Rückseiten der Düsenspitzen 108 entsprechend schräg ausgestaltet. Dabei ist die Kombination von Halteelement 110 und Verteilerblock 128 so ausgestaltet, dass die Düsenspitzen 108 in der Einbaulage, in der die Kanäle 148 der Düsenspitzen 108 mit den Verteilerkanälen 130 in Deckung sind, beidseitig sowohl an dem Verteilerblock 128 als auch an dem Halteelement 110 anliegen. Wird nun durch das Anziehen der Befestigungsmittel 118 eine Kraft von oben auf das Halteelement 110 bewirkt, werden die Düsenspitzen 108 leicht nach unten bewegt und aufgrund der räumlichen Situation gegen den Verteilerblock 128 gepresst. Hierdurch wird eine verbesserte Abdichtung des Übergangs zwischen Düsenspitze 108 und Verteilerblock 128 erzielt.

Die Figur 4 zeigt den Aufbau des Düseneinsatzes 102 wir zuvor mit Bezug auf Figur 3 beschrieben wurde nochmals in einer Explosionsdarstellung. Dabei ist insbesondere die besondere Ausformung der Seitenflächen das Verteilerblock 128 des Verteilerelements 120 zu erkennen. Es handelt sich demnach je Öffnung eines Verteilerkanals 130 um eine angeschrägte Fläche, welche nach dem Zusammenbau des Düseneinsatzes 102 in Kontakt mit einer Rückseite einer Düsenspitze 108 ist.

Alternativ kann der Verteilerblock 128 eine Seitenfläche aufweisen, die eine Zylindermantelform aufweist oder je Öffnung eines Verteilerkanals 130 eine plane Fläche aufweist, die mit der Bodenfläche des Verteilerblocks 128 einen rechten Winkel einschließt. Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 100 | Spritzgießdüse | 131 | erste Dichtfläche |
| 102 | Düseneinsatz | 132 | zweite Dichtfläche |
| 104 | Anschluss | 133 | dritte Dichtfläche |
| 106 | Anschluss | 134 | vierte Dichtfläche |
| 108 | Düsenspitze 25 | 136 | Schraube |
| 110 | Halteelement | 138 | Schraube |
| 112 | Heizleiterbahn | 140 | Aufnahme |
| 114 | Abdeckelement | 142 | Öffnung |
| 116 | Dichtelement | 144 | Öffnung |
| 118 | Befestigungsmittel 30 | 146 | Bohrung |
| 120 | Verteilerelement | 148 | Kanal |
| 122 | Anschlussstutzen | 152 | Düsenkörper |
| 123 | Ausnehmung | 154 | Zuführkanal |
| 124 | Positioniermittel | 156 | Seitenflächen |
| 126 | Dichthülse 35 | 158 | Strömungskanal |
| 128 | Verteilerblock | 160 | Aufnahmeöffnung |
| 130 | Verteilerkanal | | |

## Patentansprüche

1. Düseneinsatz (102) für eine Spritzgießdüse (100) eines Spritzgießwerkzeugs mit einem Halteelement (110), einem Verteilerelement (120) und wenigstens einer Düsenspitze (108),
wobei in dem Verteilerelement (120) ein Strömungskanal (158) und wenigstens ein Verteilerkanal (130) für eine zu verarbeitende Spritzgießmasse ausgebildet ist, wobei der Strömungskanal (158) eine Aufnahmeöffnung (160) aufweist und dazu ausgebildet ist, die Spritzgießmasse von der Spritzgießdüse (100) über die Aufnahmeöffnung (160) zu empfangen und dem wenigstens einen Verteilerkanal (130) zuzuführen, wobei sich der wenigstens eine Verteilerkanal (130) quer zu dem Strömungskanal (158) erstreckt, und wobei der Verteilerkanal (130) dazu ausgebildet ist, die von dem Strömungskanal (158) empfangene Spritzgießmasse der wenigstens einen Düsenspitze (108) zuzuführen, sodass die zu verarbeitende Spritzgießmasse über die Düsenspitze (108) einer in einem Formeinsatz ausgebildeten Formkavität des Spritzgießwerkzeugs zugeführt wird,
wobei jede Düsenspitze (108) quer zu der Erstreckungsrichtung des Strömungskanals (158) ausgerichtet in dem Halteelement (110) lösbar angeordnet und durch das Verteilerelement (120) in ihrer Position in dem Halteelement (110) fixiert ist,
**dadurch gekennzeichnet, dass**
der Düseneinsatz (102) ferner ein Dichtelement (116) mit wenigstens einer ersten Dichtfläche (131) und einer zweiten Dichtfläche (132) aufweist, wobei das Haltelement (110) wenigstens eine dritte Dichtfläche (133) aufweist, wobei das Dichtelement (116) an dem Halteelement (110) so befestigt ist, dass die erste Dichtfläche (131) auf die dritte Dichtfläche (133) gepresst wird, wobei die zweite Dichtfläche (132) an eine vierte Dichtfläche (134), die an der Spritzgussdüse (100) angeordnet ist, gepresst wird, wenn der Düseneinsatz (102) in einer Aufnahme für den Düseneinsatz (102) der Spritzgussdüse (100) aufgenommen und befestigt ist.

2. Düseneinsatz (102) nach Anspruch 1, **dadurch gekennzeichnet, dass** das Dichtelement (116) scheibenförmig ist.

3. Düseneinsatz (102) nach Anspruch 1 oder 2, **dadurch gekennzeichnet, dass** das Dichtelement (116) aus einem schlecht wärmeleitenden Material besteht und auf einer der Aufnahmeöffnung (160) des Strömungskanals (158) zugewandten Seite des Halteelements (110) angeordnet ist.

4. Düseneinsatz (102) nach einem der vorherigen Ansprüche, **dadurch gekennzeichnet, dass** das Dichtelement (116) einteilig ist.

5. Düseneinsatz (102) nach einem der vorherigen Ansprüche, **dadurch gekennzeichnet, dass** der Düseneinsatz (102) wenigstens ein Befestigungsmittel (138) aufweist, wobei das wenigstens eine Befestigungsmittel (138) durch das Halteelement (110) und das Dichtelement (116) hindurchragt und dazu ausgebildet ist, das Dichtelement (116) mit einer Kraft in Richtung auf das Halteelement (110) zu beaufschlagen, sodass die erste Dichtfläche (131) auf die dritte Dichtfläche (133) gepresst wird.

6. Düseneinsatz (102) nach einem der vorherigen Ansprüche, **dadurch gekennzeichnet, dass** der Düseneinsatz (102) weitere Befestigungsmittel (118) aufweist, die zumindest durch das Verteilerelement (120) und das Halteelement (110) hindurchragen und dazu ausgebildet sind, das Haltelement (110) und das Verteilerelement (120) an einer Spritzgießdüse (100) zu befestigen, wobei bei einer Beaufschlagung mit einer Kraft in Richtung auf das Halteelement (110) durch das Befestigungsmittel (118) eine Kraft auf die wenigstens eine Düsenspitze (108) in Richtung auf das Verteilerelement (120) ausgeübt wird.

7. Düseneinsatz (102) nach einem der vorherigen Ansprüche, **dadurch gekennzeichnet, dass** an dem Halteelement (110) wenigstens ein Positioniermittel (124) angeordnet ist, welches in eine Ausnehmung (123) des Dichtelements (116) so eingreift, dass die Lage des Dichtelements (116) relativ zu dem Halteelement (110) durch den Eingriff des Positioniermittels (124) in die Ausnehmung (123) festgelegt ist.

8. Düseneinsatz (102) nach einem der vorherigen Ansprüche, **dadurch gekennzeichnet, dass** der Düseneinsatz (102) ferner ein Abdeckelement (114) aufweist, wobei das Abdeckelement (114) auf der der Aufnahmeöffnung (160) des Verteilerelements (120) abgewandten Seite des Verteilerelements (120) an dem Verteilerelement (120) angeordnet ist, sodass das Verteilerelement (120) im Bereich der Verteilerkanäle von dem Halteelement (110) und dem Abdeckelement (114) vollständig umschlossen ist.

9. Düseneinsatz (102) nach einem der vorherigen Ansprüche, **dadurch gekennzeichnet, dass** das Halteelement (110) beheizt ist.

10. Düseneinsatz (102) nach einem der vorherigen Ansprüche, **dadurch gekennzeichnet, dass** der Düseneinsatz (102) je Düsenspitze (108) eine Dichthülse (126) aufweist, wobei das Halteelement (110) je Düsenspitze (108) eine Aufnahme (140) aufweist, wobei in jede der Aufnahmen (140) jeweils eine Dichthülse (126) eingesetzt ist, wobei in die Dichthülsen (126) je eine Düsenspitze (108) zumindest teilweise eingesetzt ist.

11. Spritzgießdüse (100) mit einem Düseneinsatz (102) nach einem der vorherigen Ansprüche, wobei die Spritzgießdüse (100) wenigstens einen Düsenkörper (152) aufweist, in dem ein Zuführkanal (154) und eine Aufnahme für den Düseneinsatz (102) ausgebildet ist, wobei der Zuführkanal (154) dazu ausgebildet ist, eine zu verarbeitende Spritzgießmasse zu der Aufnahme zu leiten, wobei der Düseneinsatz (102) in die Aufnahme eingesetzt ist, sodass der Strömungskanal (158) des Düseneinsatzes (102) mit dem Zuführkanal (154) der Spritzgießdüse (100) strömungsverbunden ist.

12. Spritzgießwerkzeug mit einer Spritzgießdüse (100) nach Anspruch 11.
